# EUROPEAN PATENT APPLICATION

(11) **EP 1 515 335 A1**
(43) Date of publication of application: **16.03.2005**
(21) Application number: 04020275.6
(22) Date of filing: 26.08.2004
(51) Int. Cl.: G11B 20/18

(54) **Content playback method, content playback apparatus, and content distribution method**

(30) Priority: 27.08.2003 JP 2003302429
(71) Applicant: SONY CORPORATION, Tokyo (JP)
(72) Inventor: Koyata, Tomohiro, Shinagawa-ku Tokyo (JP)
(74) Representative: Melzer, Wolfgang, Dipl.-Ing.

(57) **Abstract**

A distribution server transmits compressed and encoded music data and control information to a music recording-and-playback apparatus. The music recording-and-playback apparatus stores the compressed and encoded music data in an HDD and performs extended decoding for the music data read out from the HDD in a decoder to play back the music. The extended decoding in the decoder is controlled by a main controller based on the control information to limit the playback bandwidth of the music. After a user has previewed the music and has decided the purchase of the music, the distribution server transmits information for releasing the bandwidth limitation based on the control information to the music recording-and-playback apparatus.

## Description

### BACKGROUND OF THE INVENTION

### 1. Field of the Invention

The present invention relates to a method and an apparatus for decoding encoded data of content, such as music or pictures, to play back the content and to a content distribution method.

Content means content information, such as music, videos or pictures including motion pictures or still pictures, or software games, which are represented by signals and which can be visually and acoustically recognized by a person.

### 2. Description of the Related Art

Methods in which compositors supply content including music or pictures, for example, music signals and users purchases them include a method of supplying or purchasing packaged storage media, such as phonorecords or compact discs (CDs), in which music signals are recorded. Users manage the packaged storage media by themselves and mount them on playback apparatuses to play the music.

Recently, methods of supplying music signals from providers to users by music distribution have been implemented. In such methods, music signals are transmitted via transmission media including the Internet from distribution servers to user terminals where the music signals are downloaded.

In these cases, the music signals are generally compressed and encoded in consideration of the transmission rate or transmission capacity of the transmission media or the storage capacity of the user terminals. As the storage media for the user terminals, mass storage media typified by hard disks have been used in recent years.

Not only music data downloaded by users by the music distribution but also music data purchased in the form of the packaged storage media described above can be compressed and encoded in the same format to record them in such mass storage media.

With the methods by using such mass storage media, the users can collectively manage their own music data and, therefore, can efficiently determine the status of the music data or retrieve desired music.

In addition, recording desired music data in an external packaged storage medium allows the desired music to be played back by a portable playback apparatus. Such transfer is generally called checkout, in which the number of allowable times of recording is generally limited in order to prevent disordered recording in external storage media.

Since music signals are generally encoded as digital music data, recording the encoded data in another storage medium without change permits reproduction without deteriorating the sound quality. Accordingly, technologies including encryption, in which only the purchaser of music can play back the music and reproducing of the music in other storage media can be prevented, have been proposed.

So-called preview is demanded for confirmation by the user of music before the user purchases the music. However, since the preview is preformed before purchasing music, it is necessary to provide a mechanism in which the music cannot be played back in a complete form. For example, only part of the music is played back or the number of times of playing back the music is limited.

Japanese Unexamined Patent Application Publication No. 2002-311998 discloses a method of controlling the playback quality (sound quality or picture quality) for preview by providing for the preview a dummy-data part of first encoded data, such as music data, that is replaced with a subset code string of second encoded data.

However, with methods in which only part of music can be played back for preview, the user can miss an opportunity to purchase preferred or desired music or can erroneously purchase music that is not preferred or desired because there are cases in which the user cannot determine whether he/she purchases the music only by listening to part of the music. In addition, it is difficult for a music provider to draw sufficient attention to the music.

With methods of limiting the number of times of playing back music for preview, the music cannot be played back at all after playing back the music the limited number of times. For example, when the music is played back as background music (BGM), a limited number of times can be reached before the music is sufficiently previewed. Although the user can avoid such a situation if he/she consciously manages the number of times of playback, the management imposes a heavy burden on the user when the number of pieces of music is increased. Furthermore, the methods require re-downloading of the music data for purchasing the music, thus bothering the user.

With methods of generating music data for preview, in addition to original music data, as shown in the above publication, it is necessary for the music composer to generate the music data twice and to prepare a mass storage device for storing the music data, thus imposing a heavy burden on the music composer.

### SUMMARY OF THE INVENTION

Accordingly, it is an object of the present invention to provide a content playback method and a content playback apparatus capable of easily and arbitrarily controlling the playback quality of content including music and pictures for preview or the like, without preparing content encoded data that is different from original content encoded data for preview, when the encoded data of the content is decoded to play back the content.

A content playback method includes the steps of decoding content encoded data to play back the content and controlling playback quality of the content based on control information corresponding to the content encoded data.

A content playback apparatus includes a decoding unit for decoding content encoded data; and a control unit for controlling playback quality of content based on control information corresponding to the content encoded data.

A content distribution method includes the steps of transmitting content encoded data and control information from a content distribution server to a content playback apparatus; receiving the content encoded data and the control information in the content playback apparatus; decoding the content encoded data in the content playback apparatus so as to limit playback quality of content based on the control information to play back the content; and transmitting information for releasing limitation of the playback quality of the content based on the control information from the content distribution server to the content playback apparatus, in response to a request from the content playback apparatus.

In the content playback method described above, a control unit in a content playback apparatus controls the playback quality of the content based on control information that is appended to the content encoded data and that is transmitted from a distribution server, control information that is appended to the content encoded data and that is recorded in a content storage medium, or control information generated in accordance with the content encoded data in the content playback apparatus. Accordingly, the playback quality of the content can be easily and arbitrarily controlled for preview or the like, without preparing content encoded data that is different from original content encoded data for preview.

As described above, according to the present invention, it is possible to easily and arbitrarily control the playback quality of the content including music and pictures for preview or the like, without preparing content encoded data that is different from original content encoded data for preview, when the encoded data of the content is decoded to play back the content.

### BRIEF DESCRIPTION OF THE DRAWINGS

Fig. 1 shows an embodiment of a content distribution system including a content playback apparatus according to the present invention;
Fig. 2 illustrates a distribution and purchase process of music;
Fig. 3 illustrates a method of compressing and encoding music data;
Fig. 4 illustrates a first method for bandwidth limitation when music is played back;
Fig. 5 illustrates a second method for bandwidth limitation when music is played back;
Fig. 6 illustrates a third method for bandwidth limitation when music is played back;
Fig. 7 illustrates a fourth method for bandwidth limitation when music is played back;
Fig. 8 shows a distribution and purchase process when music data is distributed for preview;
Fig. 9 illustrates a method of limiting playback quality; and
Fig. 10 illustrates another method of limiting the playback quality.

### DESCRIPTION OF THE PREFERRED EMBODIMENTS

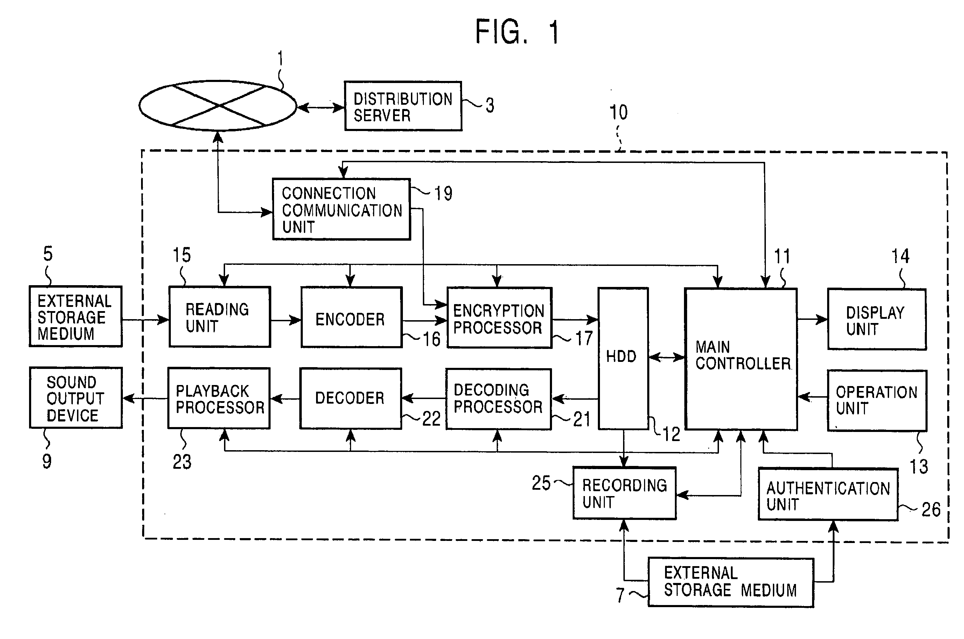

### Embodiments When Playing Back Music: Figs. 1 to 10

Fig. 1 shows an embodiment of a content distribution system including a content playback apparatus according to the present invention. Fig. 1 illustrates a case in which music distributed from a distribution server of a content provider is played back by a music recording-and-playback apparatus of a user.

The entire content distribution system is structured such that a music recording-and-playback apparatus 10 and a distribution server 3 are connected to the Internet 1.

A main controller 11 controls each component in the music recording-and-playback apparatus 10. Music data and information appended to it are stored in an internal hard disk drive (HDD) 12, serving as a mass storage unit, and are controlled by the main controller 11.

An operation unit 13 and a display unit 14, which constitute a user interface, are connected to the main controller 11. The user uses the operation unit 13 to perform operations or instructions for the main controller 11. The main controller 11 displays in the display unit 14 an operation state of the music recording-and-playback apparatus 10 or a management state of music in the music recording-and-playback apparatus 10.

### Reading Music from External Storage Medium: Fig. 1

An external storage medium 5 is, for example, a compact disc (CD) and records music information.

A reading unit 15 in the music recording-and-playback apparatus 10 reads the music information from the external storage medium 5 in the music recording-and-playback apparatus 10 as a pulse code modulation (PCM) data file or a PCM data stream. The reading unit 15 may be an external reading apparatus of the music recording-and-playback apparatus 10.

The music data (PCM data) read in the music recording-and-playback apparatus 10 by the reading unit 15 is compressed and encoded by an encoder 16 in order to further efficiently use the storage capacity in the HDD 12 or in preparation for recording in an external storage medium 7 described below.

The compressed and encoded music data is encrypted by an encryption processor 17. Since this encryption puts the music data under the control of the music recording-and-playback apparatus 10, the music data cannot be decrypted (decoded) when it is simply recorded in another storage medium, thus protecting the copyright of the music.

In addition to the music data, music identification information including an international standard recording code (ISRC) and additional information, such as text information indicating a title of the music or the like, which is appended to the music data and is recorded in the external storage medium 5, are read from the reading unit 15.

The encrypted music data and the additional information supplied from the encryption processor 17 are recorded in the HDD 12 in a state where the relationship between the music data and the additional information is represented, and are put in the control of the main controller 11.

For example, a manufacturer of the music stored in the HDD 12 can be revealed by so-called digital watermarking.

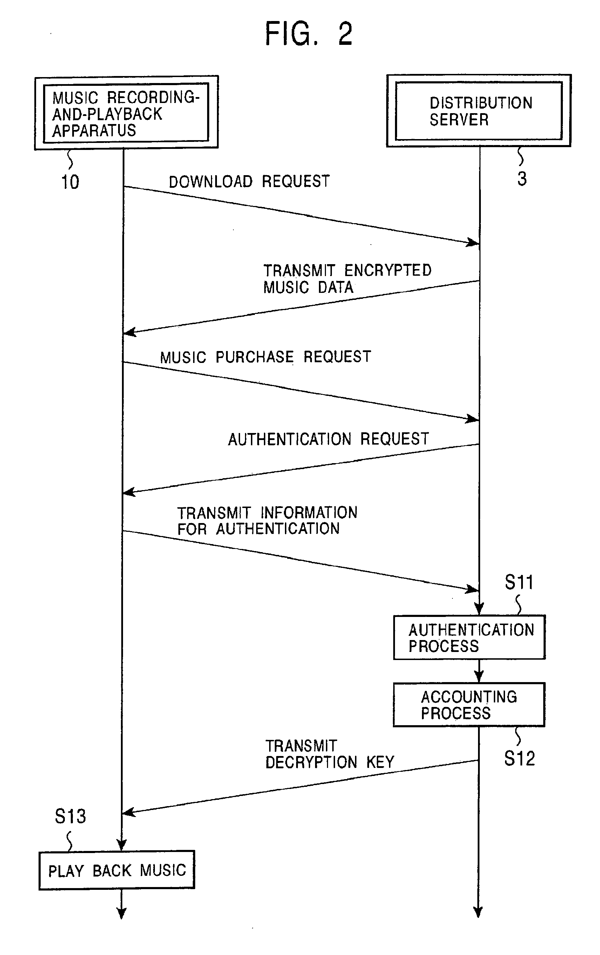

### Distributing and Downloading Music: Fig. 1 and Fig. 2

The distribution server 3 of a music provider stores a lot of music data in its storage unit and transmits the music data to the music recording-and-playback apparatus 10 in response to a request from the music recording-and-playback apparatus 10.

In the music recording-and-playback apparatus 10, a connection communication unit 19 establishes a connection with the distribution server 3, transmits a music retrieval request to the distribution server 3, receives information required for the retrieval, which is transmitted from the distribution server 3, transmits a download request to the distribution server 3, and receives the music data transmitted from the distribution server 3 under the control of the main controller 11 based on the operation in the operation unit 13.

The user purchases desired music in accordance with, for example, a process shown in Fig. 2.

Referring to Fig. 2, a step of transmitting information required for the music retrieval request or the retrieval is omitted and steps after the user has determined music to be purchased are shown. First, the music recording-and-playback apparatus 10 transmits a download request of music data to the distribution server 3. In response to the download request, the distribution server 3 encrypts the compressed and encoded music data and transmits the encrypted music data to the music recording-and-playback apparatus 10.

Since the music data distributed in this manner is encrypted, the music recording-and-playback apparatus 10 cannot play back the music data without change.

Accordingly, the music recording-and-playback apparatus 10 transmits a music purchase request to the distribution server 3. In response to the music purchase request, the distribution server 3 transmits an authentication request to the music recording-and-playback apparatus 10.

The music recording-and-playback apparatus 10 transmits information for authentication to the distribution server 3. In response to this transmission, the distribution server 3 performs an authentication process in Step S11. If the distribution server 3 authenticates the purchase of the music, the distribution server 3 performs an accounting process in Step S12.

Various authentication methods can be employed in the authentication process. For example, a music provider issues an identification code to the user when the user has held a contact with the music provider (music distributor) and the user sets a password to perform the authentication by using the identification code and the password.

The information for authentication, such as the identification code or the password, may be set between the user and a financial institution or a credit institution, instead of being set between the user and the music provider. In this example in Fig. 2, the information for authentication is set between the user and the music provider and is recorded in a database in the distribution server 3.

If the distribution server 3 accepts the purchase of the music as a result of the accounting process in Step S12, the distribution server 3 transmits a decryption key for decoding the encrypted music data that has already been transmitted to the music recording-and-playback apparatus 10.

The music recording-and-playback apparatus 10 decodes the encrypted music data in Step S13 and plays back the music.

The music recording-and-playback apparatus 10 temporarily stores the encrypted music data that has been received in the HDD 12. When the music recording-and-playback apparatus 10 receives the decryption key, the connection communication unit 19 decodes the encrypted music data that has been stored in the HDD 12 by using the decryption key.

The compressed and encoded music data after the decoding is encrypted in the encryption processor 17 in the music recording-and-playback apparatus 10 and is recorded in the HDD 12.

When the music data distributed from the distribution server 3 is compressed and encoded in the same manner as in the music recording-and-playback apparatus 10, the music recording-and-playback apparatus 10 performs the steps described above. However, when the music data distributed from the distribution server 3 is compressed and encoded in a manner different from the manner in the music recording-and-playback apparatus 10, the connection communication unit 19 in the music recording-and-playback apparatus 10 performs extended decoding for the compressed and encoded music data after decoding the encrypted music data that has been compressed and encoded. The music data that has been subject to the extended decoding is compressed and encoded by the encoder 16 in the manner adopted in the music recording-and-playback apparatus 10, the compressed and encoded music data is encrypted by the encryption processor 17, and is recorded in the HDD 12.

In the music distribution described above, the additional information, such as the music identification information or the text information, is distributed from the distribution server 3 along with the music data, is recorded in the HDD 12 in a state where the relationship between the music data and the additional information is represented, and is put in the control of the main controller 11.

### Playing Back Stored Music: Fig. 1

In order to play back the music stored in the HDD 12 in the manner described above, the user uses the operation unit 13 to display a title or the like of the music in the display unit 14 where the user specifies the music to be played back. The main controller 11 reads out the compressed, encoded, and encrypted music data of the specified music from the HDD 12.

The compressed, encoded, and encrypted music data that has been read out from the HDD 12 is decoded by a decoding processor 21 and is subject to extended decoding in a decoder 22 that provides PCM data.

The PCM data is supplied to a playback processor 23. In the playback processor 23, the PCM data is converted into an analog music signal by a digital-to-analog converter, is filtered by a filter, and is amplified by an amplifier before being transmitted to a sound output device 9. The sound output device 9 is, for example, a speaker and plays back the music. The digital-to-analog converter, the filter, and the amplifier may be provided in the external sound output device 9 and a speaker or the like is provided in the music recording-and-playback apparatus 10.

### Recording Stored Music in External Storage Medium: Fig. 1

The music recording-and-playback apparatus 10 can record the music data stored in the HDD 12 in the external storage medium 7, such as a flash memory, attached to the music recording-and-playback apparatus 10 by using a recording unit 25.

In such a case, since the copyright can be infringed if the music data is recorded in an external storage medium at random, the number of pieces of music data to be recorded in the external storage medium is limited to, for example, three.

Accordingly, identification information, such as an identification code, is embedded in the external storage medium 7. An authentication unit 26 in the music recording-and-playback apparatus 10 determines whether the external storage medium 7 is valid based on the identification information.

If the authentication unit 26 confirms the validity of the external storage medium 7, the recording unit 25 in the music recording-and-playback apparatus 10 writes the encrypted music data stored in the HDD 12 in the external storage medium 7. At the same time, a decryption key for decoding the encrypted music data is distributed.

A state in which the music data is written in the external storage medium 7 is called checkout, as described above, and is controlled by the main controller 11. In this checkout, the external storage medium 7 can play back the music data recorded therein by using its external playback device having the structure corresponding to the decoding processor 21, the decoder 22, and the playback processor 23 in the music recording-and-playback apparatus 10.

A reverse operation of the checkout is called checkin, which is logically an operation of returning the music data in the external storage medium 7 to the music recording-and-playback apparatus 10. In this checkin, the checkout state of the external storage medium 7 is released and, therefore, the music data in the external storage medium 7 cannot be played back by using the external playback device.

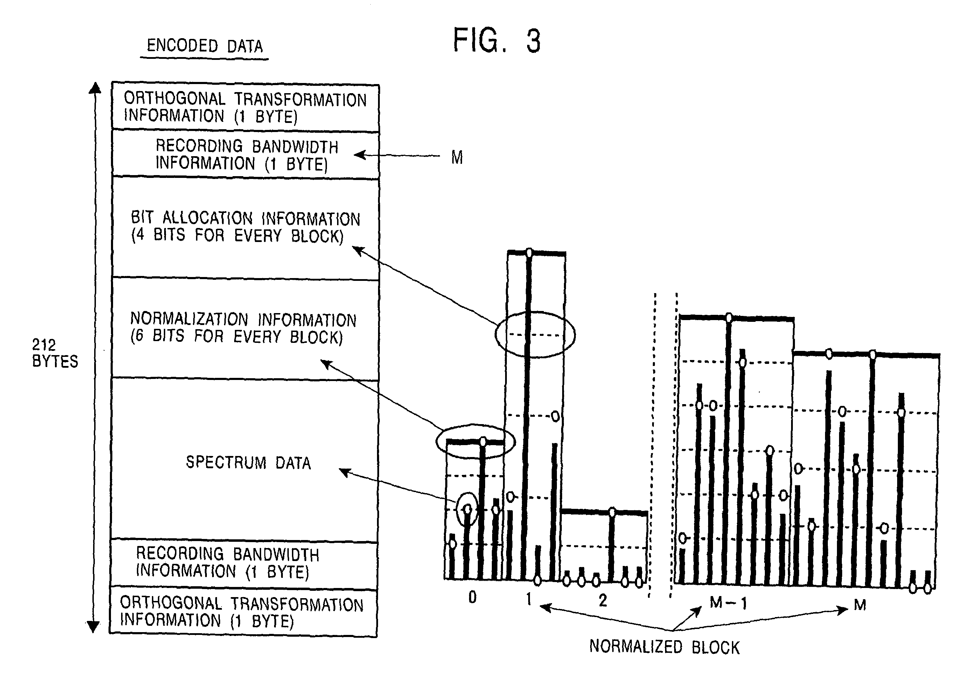

### Method of Compressing and Encoding Music Data: Fig. 3

The music data in the music recording-and-playback apparatus 10 is compressed and encoded by, for example, performing orthogonal transformation for the music data (PCM data) before being compressed and encoded to calculate a frequency spectrum data of the music data, that is, to convert time-base data into data on frequency-base data for every unit time (frame) and performing normalization and quantization by bit allocation for the spectrum data for every predetermined block having a predetermined number of spectra.

Fig. 3 illustrates a method of compressing and encoding music data. As shown in Fig. 3, a predetermined block is called a normalized block. A size of data for which the orthogonal transformation is performed, a minimum unit of encoded data, and the like are varied according to a compression format or a desired data compression ratio. For example, when the sampling frequency of a music signal is set to 44.1 kH, the time-base data for 512 samples (for 11. 6 milliseconds) is subject to the orthogonal transformation to be compressed into encoded data of 212 bytes. The minimum unit of the 212-byte encoded data is called one sound unit.

Fig. 3 shows the data structure of one sound unit, that is, the 212-byte encoded data on the left, and shows how to encode a spectrum corresponding to the data structure on the right. As shown in Fig. 3, the normalized blocks having greater numbers have higher frequencies.

Orthogonal transformation information is recorded in the first byte of the 212-byte encoded data. The orthogonal transformation information indicates how to perform the orthogonal transformation if a window function or the like of the orthogonal transformation can be dynamically changed. An inverse orthogonal transformation is performed based on the orthogonal transformation information for performing the extended decoding for the music data. Accordingly, if a certain orthogonal transformation is always performed, the orthogonal transformation information is not necessary.

Recording bandwidth information is recorded in the second byte of the 212-byte encoded data. The recording bandwidth information indicates how many normalized blocks are recorded in the current frame (212-byte encoded data). Specifying the value of the recording bandwidth information permits specification of the number of blocks smaller than the number of blocks specified in the format. For example, the amount of information in lower frequencies can be increased if no recording is performed in higher frequencies.

Bit allocation information is recorded in the bytes subsequent to the second byte. For example, 16 quantization steps are allocated by using four-bit codes for every normalized block. However, the actual amount of allocation is determined based a result of analysis of the frequency components or the like of the music data by an encoder that performs compression and encoding (the encoder 16 in the music recording-and-playback apparatus 10 or an encoder in the distribution server 3 in the embodiment shown in Fig. 1).

Normalization information is recorded in bytes subsequent to the bytes having the recorded bit allocation information. For example, 64 table values from 0 to 63, which are represented by six-bit codes, are prepared for normalization and a minimum table value exceeding the maximum spectrum value in a block is recorded as a normalization value for every normalized block.

Spectrum data is recorded in bytes subsequent to the bytes having the recorded normalization information. As described above, the number of spectra recorded in the normalized block is determined in the format and the number of allocated bits is specified based on the bit allocation information for every normalized block, so that it is possible to determine how many bits each piece of spectrum data is recorded in.

One byte of recording bandwidth information and one byte of orthogonal transformation information subsequent to the bytes having the recorded spectrum data are not essential. They are reproductions of the recording bandwidth information in the second byte and the orthogonal transformation information in the first byte in preparation for any reading error.

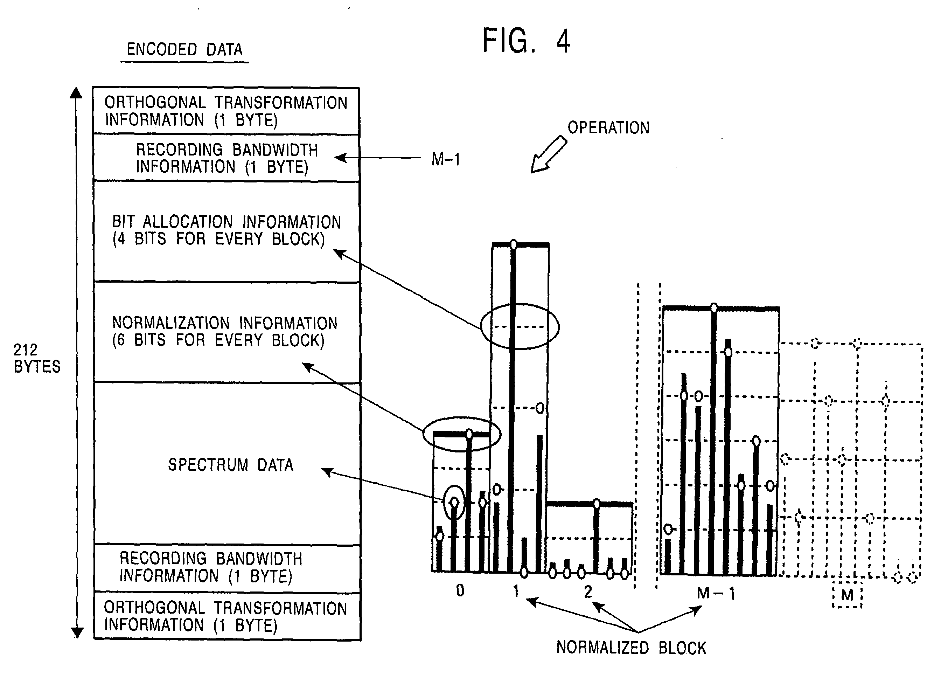

### Bandwidth Limitation When Playing Back Music: Figs. 4 to 7

In the music recording-and-playback apparatus 10 shown in Fig. 1, the music data, which has been compressed and encoded by the compression and encoding method described above, is subject to the extended decoding by spectrum data extraction, inverse orthogonal transformation, bandwidth synthesis, or the like in the decoder 22 to play back the music.

In this case, the main controller 11 controls the decoder 22 based on the operation in the operation unit 13 or control information described below to control the extended decoding of the compressed and encoded data in the decoder 22. As a result, it is possible to limit playback bandwidth of the music and to limit playback sound quality according to the following methods.

As a first method, the recording bandwidth information described above is manipulated. For example, as shown in Fig. 4, the recording bandwidth information is manipulated as if the maximum number of the normalized block is M-1, in spite of the recording bandwidth that actually ranges from the bandwidth of the zero-th normalized block to the bandwidth of the M-th normalized block.

As a result, the spectrum data in the M-th normalized block is not extracted in the extended decoding in the decoder 22, thus providing the playback bandwidth lacking in higher frequencies.

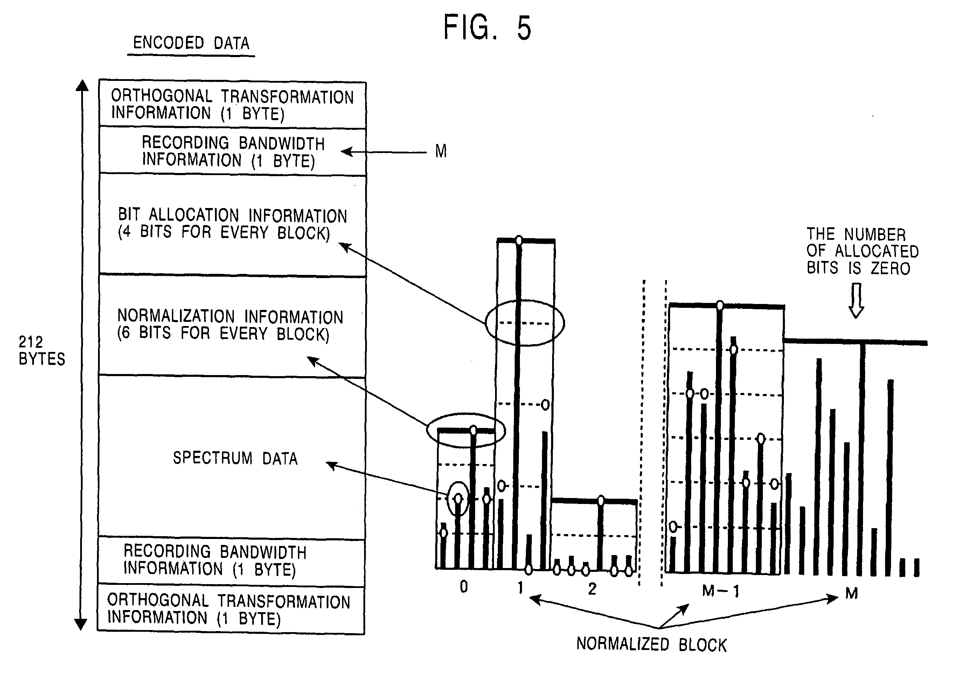

As a second method, the bit allocation information of a normalized block is manipulated such that the number of allocated bits is zero. For example, as shown in Fig. 5, the number of allocated bits of the M-th normalized block is set to zero.

Since setting the number of allocated bits to zero corresponds to deleting the value of the quantization, the spectrum data is not extracted from the normalized block, thus limiting the bandwidth. The second method is not limited to the M-th normalized block in higher frequencies and may be applied to an arbitrary normalized block to perform the same manipulation.

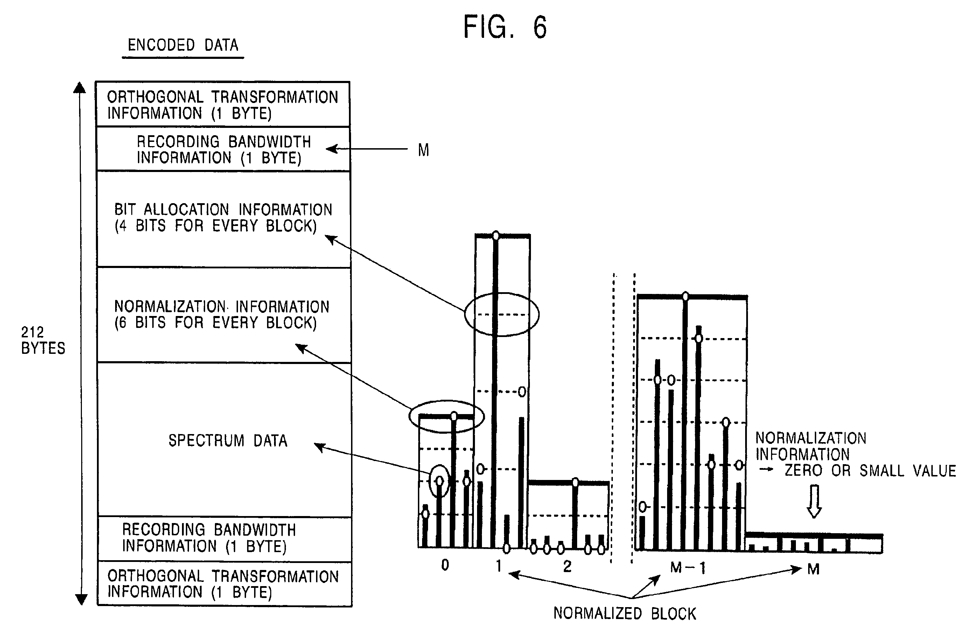

As a third method, normalization information of a normalized block is set to zero or a small value. For example, as shown in Fig. 6, the normalization information of the M-th normalized block in higher frequencies is set to zero or a small value.

The normalization information that comes close to zero decreases the spectrum data of the normalized block, thus practically limiting the bandwidth. The third method is not limited to the M-th normalized block in higher frequencies and may be applied to an arbitrary normalized block to perform the same manipulation.

As a fourth method, the extended decoding is manipulated such that the spectrum data itself of a frequency band is set to zero.

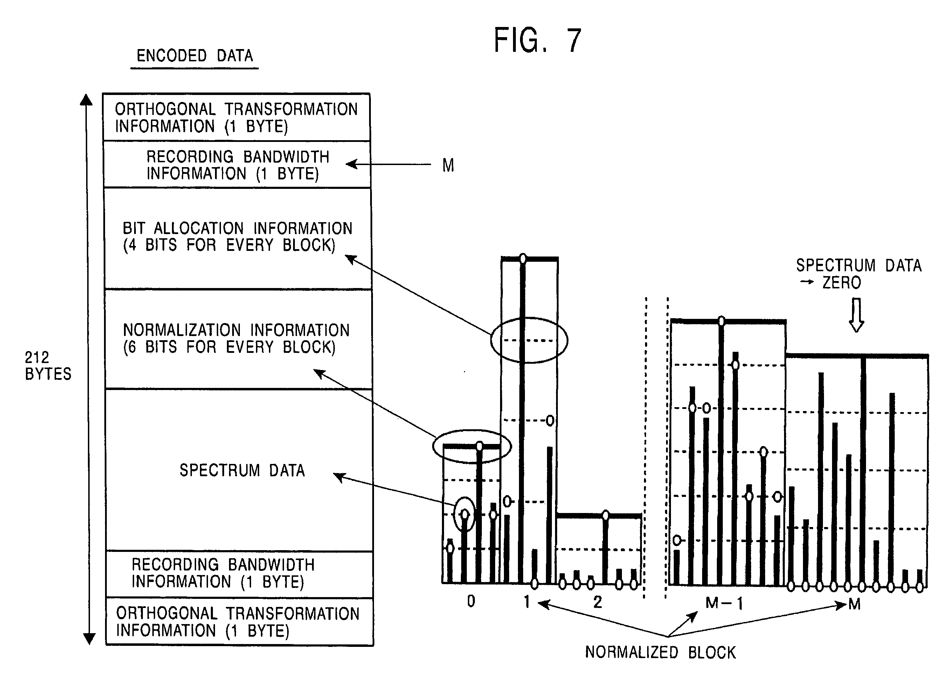

For example, referring to Fig. 7, small ellipses, each indicating a quantization value, are shown at zero points for the spectrum data of the M-th normalized block. That is, all the spectrum data of the M-th normalized block is set to zero. As a result, the spectrum data in the M-th normalized block is not extracted at all, thus providing the playback bandwidth lacking in higher frequencies.

The fourth method is not limited to the M-th normalized block or to a unit of normalized block, and may be applied to arbitrary spectrum data in an arbitrary normalized block to perform the same manipulation.

Two or more of the first to fourth methods described above may be combined.

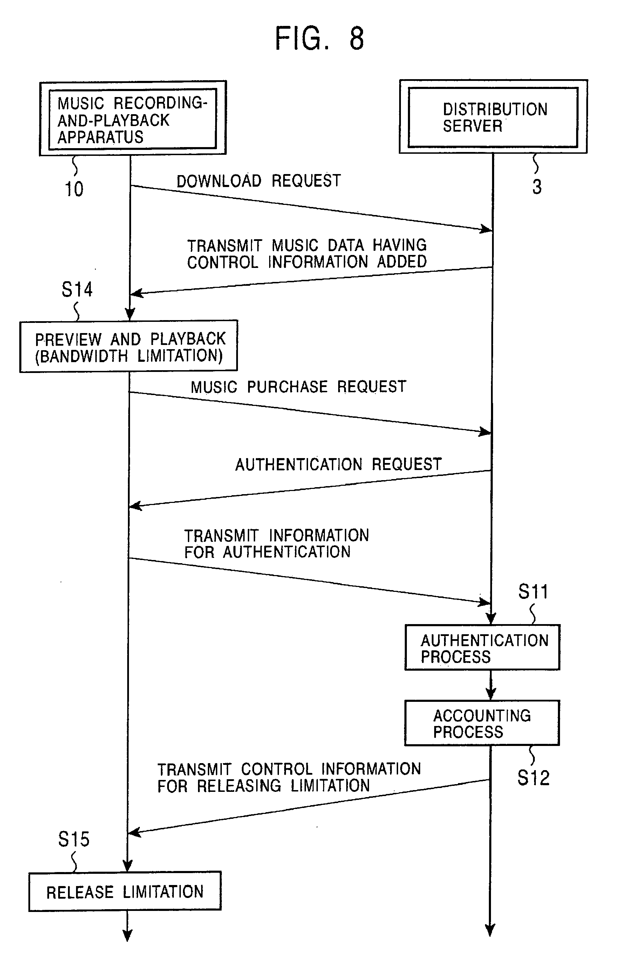

### Bandwidth Limitation during Preview: Figs. 8 to 10

Although controlling the playback sound quality based on the bandwidth limitation described above is not generally necessary for playing back music, it has a great effect on, for example, distribution of music data for preview.

When music data is distributed for preview, a process different from that shown in Fig. 2 is used. Fig. 8 shows a distribution and purchase process when music data is distributed for preview.

First, the music recording-and-playback apparatus 10 transmits a download request of music data to the distribution server 3. In response to the download request, the distribution server 3 transmits the compressed and encoded music data having control information added to the music recording-and-playback apparatus 10.

The control information here is used for limiting the bandwidth according to the manipulations described above when the user previews the music played back by the music recording-and-playback apparatus 10.

In Step S14, the music recording-and-playback apparatus 10 receives the compressed and encoded music data. The encryption processor 17 in the music recording-and-playback apparatus 10 encrypts the compressed and encoded music data that is stored in the HDD 12. The encrypted music data read out from the HDD 12 is decoded by the decoding processor 21 and is subject to the extended decoding in the decoder 22 to play back the music. The user previews the music.

However, in Step S14, the playback bandwidth is limited, as described below, and the playback sound quality is limited under the control of the main controller 11 based on the above control information.

If the user wants to purchase the music as a result of the preview, the music recording-and-playback apparatus 10 transmits a music purchase request to the distribution server 3 in accordance with the operation of the user by using the operation unit 13. In response to the music purchase request, the distribution server 3 transmits an authentication request to the music recording-and-playback apparatus 10.

The music recording-and-playback apparatus 10 transmits information for authentication to the distribution server 3. In response to this transmission, the distribution server 3 performs an authentication process in Step S11. As a result, if the distribution server 3 authenticates the purchase of the music, the distribution server 3 performs an accounting process in Step S12.

If the distribution server 3 finally accepts the purchase of the music as a result of the accounting process, the distribution server 3 transmits control information for releasing the limitation for preview to the music recording-and-playback apparatus 10.

The music recording-and-playback apparatus 10 releases, in Step S15, the bandwidth limitation that has been already received and that is based on the received control information for bandwidth limitation, and plays back the music in an original bandwidth.

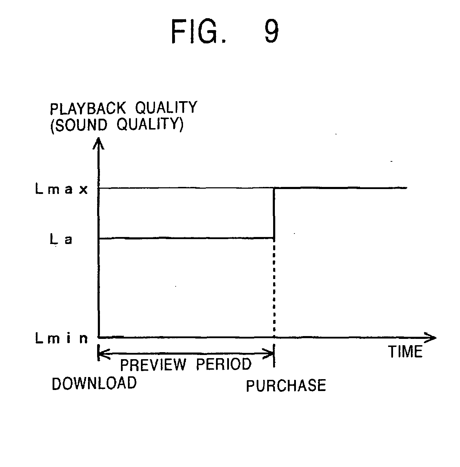

Specifically, the playback bandwidth is limited by using one of the first to fourth method described above based on the control information for bandwidth limitation during a preview period, for example, as shown in Fig. 9, ranging from a time when the music data is downloaded to a time when the music is purchased (when the control information for releasing the limitation is received).

A playback quality (sound quality) level Lmax in Fig. 9 denotes an original playback bandwidth of the music data. A level La denotes a playback quality (playback bandwidth) when the playback bandwidth is limited based on the control information for bandwidth limitation. A level Lmin denotes a playback quality (playback bandwidth) when the playback bandwidth is limited to an extent where the music cannot be discriminated.

If the level La is sufficiently higher than the level Lmin, the user can determine whether he/she purchases the music and the music provider can sufficiently draw attention to the music. If the level La is rather lower than the level Lmax, distributing the music for preview free of charge can hardly result in damage to the profit to the music provider.

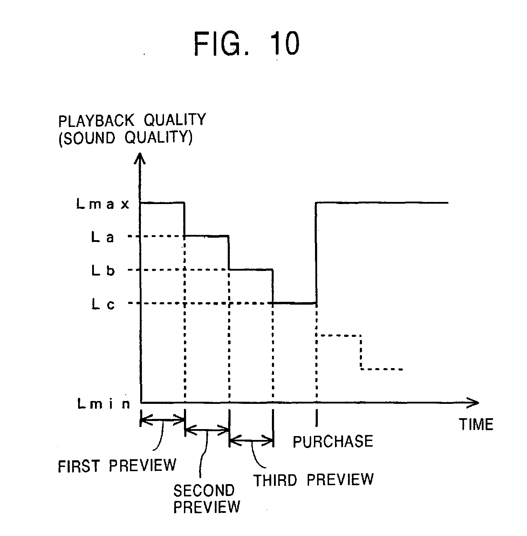

The control information for bandwidth limitation may be set such that the playback bandwidth is narrowed as the number of times of preview (the number of times of playback during the preview period) is increased. For example, referring to Fig. 10, the playback bandwidth is not limited at the first preview, as shown by a level Lmax; the playback bandwidth is narrowed at the second preview, compared with the first preview, as shown by a level La; and the playback bandwidth is narrowed at the third preview, compared with the second preview, as shown by a level Lb.

Furthermore, although not shown in a figure, the playback bandwidth may be narrowed during the preview period stepwise for every predetermined playback period or successively in the entire playback period. Alternatively, the playback bandwidth may be narrowed stepwise for every predetermined elapsed time from a time when the music data is downloaded or successively in the total elapsed time from a time when the music data is downloaded.

According to the playback methods described above, it is possible to put unique limitations on each music and, therefore, it is possible to precisely reflect the intention of a music composer or a person having the right of the music while meeting the demand of the user. In addition, there is no need for the music provider to generate music data for preview, in addition to the original music data, and it is sufficient to provide only the original music data and the control information, thus lessening the burden on the music provider. Furthermore, there is no need for the user to download new music data or to update the existing music data when he/she has decided the purchase of the music after preview.

### Another Example of Sound Quality Limitation

According to the playback methods described above, when compressing and encoding the music data by the compression and encoding method shown in Fig. 3, the extended decoding of the music data is controlled by using the methods shown in Figs. 4 to 7 to limit the playback bandwidth of the music and to limit the playback sound quality. However, there are other methods of limiting the playback sound quality during preview. For example, only part of the music that is necessary and sufficient to determine whether the user purchases the music, for example, the head of the music or a main part or a characteristic part of the music, may be played back during preview. Alternatively, stereo signals may be converted into monophonic signals to play back the music, the music may be played back excluding normal-position information, such as a vocal part, or the music having noises intentionally appended may be played back.

### Other Embodiments

Although the playback methods in which the music is played back and the playback sound quality is limited during preview are described in the embodiments described above, the present invention can be applied to cases in which videos or pictures, such as motion pictures or still pictures, are played back and the playback picture quality is limited during preview.

In order to limit the playback picture quality during preview, various methods can be employed. For example, the resolution of the picture may be reduced, the luminance thereof may be reduced, the contrast thereof may be reduced, the number of colors may be limited, the chroma of the picture may be reduced, noises may be appended to the picture, or part of the picture may be concealed. In the case of the motion pictures, only the head of the program or a main part thereof may be played back.

Although the playback quality is limited for trial (preview) in the embodiments described above, the present invention is not limited to such cases. The present invention can be applied to cases in which the playback quality is limited for displaying the usage of content. For example, the playback quality of the music is deteriorated by one level if the music stored in a device is not played back within a predetermined period, and the playback quality of the music is deteriorated by one more level if the music is not played back within another predetermined period.

## Claims

1. A content playback method comprising the steps of:
decoding content encoded data to play back the content; and
controlling playback quality of the content based on control information corresponding to the content encoded data.

2. The content playback method according to Claim 1,
wherein the content encoded data is audio encoded data, and
wherein the audio encoded data is decoded based on the control information appended to the audio encoded data to control an audio playback bandwidth.

3. The content playback method according to Claim 2,
wherein the content encoded data is audio data divided into a plurality of bandwidths, and
wherein the control information is recording bandwidth information indicating the number of the plurality of bandwidths.

4. The content playback method according to Claim 2,
wherein the content encoded data is audio data divided into a plurality of bandwidths, and
wherein the control information is bit allocation information of the data of each bandwidth.

5. The content playback method according to Claim 2,
wherein the content encoded data is audio data divided into a plurality of bandwidths, and
wherein the control information is normalization information corresponding to a maximum value in the data of the bandwidths.

6. The content playback method according to Claim 2,
wherein the value of the audio encoded data is varied as the control information to control the audio playback bandwidth.

7. A content playback apparatus comprising:
a decoding unit for decoding content encoded data; and
a control unit for controlling playback quality of content based on control information corresponding to the content encoded data.

8. The content playback apparatus according to Claim 7,
wherein the content encoded data is audio encoded data, and the content playback apparatus further comprising:
a decoding unit for decoding the audio encoded data; and
a control unit for performing decoding in the decoding unit based on the control information appended to the audio encoded data to control an audio playback bandwidth.

9. The content playback apparatus according to Claim 8,
wherein the content encoded data is audio data divided into a plurality of bandwidths, and
wherein the control information is recording bandwidth information indicating the number of the plurality of bandwidths.

10. The content playback apparatus according to Claim 8,
wherein the content encoded data is audio data divided into a plurality of bandwidths, and
wherein the control information is bit allocation information of the data of each bandwidth.

11. The content playback apparatus according to Claim 8,
wherein the content encoded data is audio data divided into a plurality of bandwidths, and
wherein the control information is normalization information corresponding to a maximum value in the data of the bandwidths.

12. The content playback apparatus according to Claim 8,
wherein the value of the audio encoded data is varied as the control information to control the audio playback bandwidth.

13. A content distribution method comprising the steps of:
transmitting content encoded data and control information from a content distribution server to a content playback apparatus;
receiving the content encoded data and the control information in the content playback apparatus;
decoding the content encoded data in the content playback apparatus so as to limit playback quality of content based on the control information to play back the content; and
transmitting information for releasing limitation of the playback quality of the content based on the control information from the content distribution server to the content playback apparatus, in response to a request from the content playback apparatus.
